# FASCICULE DE BREVET EUROPEEN

(11) **EP 4 274 984 B1**
(45) Date de publication et mention de la délivrance du brevet: **03.07.2024**
(21) Numéro de dépôt: 23715526.2
(22) Date de dépôt: 30.03.2023
(51) Int. Cl.: F17C 13/04

(54) **DISPOSITIF DE SÉCURITÉ POUR UN RÉSERVOIR DESTINÉ À CONTENIR UN GAZ SOUS PRESSION**
SICHERHEITSVORRICHTUNG FÜR EINEN TANK ZUR AUFNAHME EINES UNTER DRUCK STEHENDEN GASES
SAFETY DEVICE FOR A TANK INTENDED TO CONTAIN A PRESSURISED GAS

(30) Priorité: 01.04.2022 FR 2202988
(43) Date de publication de la demande: 15.11.2023
(73) Titulaire: PLASTIC OMNIUM NEW ENERGIES FRANCE, 69007 Lyon (FR)
(72) Inventeur: SINAULT, Yann, 1130 Bruxelles (BE); BOPWA MUNTU, Christian, 1130 Bruxelles (BE); MESJASZ, Claude, 1130 Bruxelles (BE)
(74) Mandataire: LLR
(86) Numéro de dépôt international: PCT/EP2023/058279
(87) Numéro de publication internationale: WO 2023/187048

(56) Documents cités:
- DE-A1-102011 114 724
- DE-A1-102018 211 964
- US-A1- 2021 172 540
- US-B1- 6 382 232

## Description

### Domaine technique de l'invention

L'invention se rapporte à un dispositif de sécurité pour un réservoir destiné à contenir un gaz sous pression et à un procédé de fabrication d'un tel dispositif de sécurité. L'invention se rapporte aussi à un kit pour la fabrication d'un tel dispositif de sécurité. L'invention se rapporte également à un réservoir destiné à contenir un gaz sous pression équipé du dispositif de sécurité selon l'invention et à un véhicule automobile équipé d'un tel réservoir.

### Arrière-plan technique

On connait dans l'art antérieur des réservoirs destinés à contenir un gaz sous pression. Ces réservoirs sont, par exemple, destinés à stocker du dihydrogène compressé afin d'être utilisés sur un véhicule en tant que réservoir de carburant. Ces réservoirs sont généralement équipés d'une vanne de sécurité destinée à mettre en communication fluidique l'intérieur du réservoir avec l'extérieur du réservoir lorsque la pression à l'intérieur du réservoir est trop élevée afin de relâcher le gaz stocké dans le réservoir à l'extérieur et ainsi réduire le risque d'explosion du réservoir. Parmi les vannes de sécurité utilisées, on connait notamment des vannes qui sont sensibles à la chaleur, appelées communément des dispositifs de décompression sensibles à la chaleur (« Thermal Pressure Relief Device » en anglais, et son acronyme « TPRD »). Lorsqu'un réservoir est soumis à des températures élevées, par exemple lorsqu'une flamme se trouve à proximité de celui-ci, la pression à l'intérieur du réservoir augmente jusqu'à engendrer un risque d'explosion. Les dispositifs de décompression sensibles à la chaleur sont donc particulièrement utiles pour prévenir une augmentation de la pression à l'intérieur du réservoir causée par la chaleur.

Les dispositifs de décompression sensibles à la chaleur comprennent généralement un organe de sécurité, cet organe de sécurité maintenant un piston d'obturation d'un canal d'aération du réservoir en position d'obturation du canal. Lorsqu'une source de chaleur se trouve à proximité de l'organe de sécurité, ce dernier fond ou éclate et ne maintient plus le piston d'obturation en position d'obturation du canal d'aération. Des moyens de rappel, par exemple un ressort, déplacent alors le piston d'obturation afin qu'il n'obture plus le canal d'aération, mettant ainsi en communication fluidique l'intérieur et l'extérieur du réservoir et provoquant l'échappement vers l'extérieur du gaz stocké dans le réservoir, empêchant ainsi une augmentation de la pression à l'intérieur du réservoir. Cependant, de tels dispositifs de décompression sensibles à la chaleur ne permettent la détection d'une source de chaleur que dans un rayon relativement proche de l'organe de sécurité. Ainsi, si la source de chaleur est éloignée du dispositif de décompression sensible à la chaleur, ce qui est très probable pour les grands réservoirs, la température de l'organe de sécurité n'est pas suffisamment augmentée pour qu'il fonde ou éclate. En conséquence, la pression à l'intérieur du réservoir peut augmenter et engendrer un risque d'explosion. Une solution pour surmonter ce problème a été d'augmenter le nombre de dispositifs de décompression sensibles à la chaleur équipant le réservoir afin de couvrir une plus grande surface. Toutefois, cette solution est encombrante et peu économique. De plus, en augmentant le nombre de dispositifs de décompression sensibles à la chaleur équipant un réservoir, on augmente proportionnellement le nombre d'interfaces à rendre étanches entre les dispositifs de décompression sensibles à la chaleur et le réservoir, ce qui augmente aussi les risques de fuite de gaz.

Une solution a consisté à utiliser une mèche au contact de l'organe de sécurité et s'étendant à distance sur le réservoir. Lorsqu'une source de chaleur, par exemple une flamme, est à proximité de la mèche, celle-ci s'enflamme et se consume en propageant l'énergie thermique jusqu'à l'organe de sécurité afin de le faire fondre ou éclater. Un tel dispositif de décompression sensible à la chaleur est par exemple décrit dans le document US 6 382 232 B1. Cependant, de tels dispositifs présentent des inconvénients puisque la fonte ou l'éclatement de l'organe de sécurité n'est pas systématique après que la mèche ait été enflammée. En effet, premièrement, il est possible que la combustion de la mèche s'interrompe avant qu'elle n'atteigne l'organe de sécurité. C'est par exemple le cas si la mèche est mouillée sur au moins une portion de son parcours jusqu'à l'organe de sécurité. Deuxièmement, il est difficile de maitriser le temps d'exposition de l'organe de sécurité à l'énergie thermique transmise par la mèche. La combustion de la mèche peut être trop rapide pour augmenter la température de l'organe de sécurité de manière suffisante pour qu'il fonde ou éclate. Ainsi, le risque que la présence d'une source de température provoque une augmentation de la pression à l'intérieur du réservoir de nature à engendrer une explosion reste important malgré la présence du dispositif de décompression sensible à la chaleur.

Le document DE 10 2011 114 724 A1 décrit un dispositif de sécurité pour réservoir destiné à contenir un gaz sous pression. Le dispositif de sécurité comprend un canal d'aération destiné à mettre en communication fluidique l'intérieur et l'extérieur du réservoir, un piston de sécurité mobile entre une position d'obturation du canal d'aération et une position de sécurité, une ampoule frangible maintenant le piston de sécurité en position d'obturation, une vis mobile entre une position de repos et une position de destruction de l'ampoule et un câble de type Bowden destiné, en position de repos, à maintenir la vis en position de repos à l'encontre d'une force élastique de rappel de la vis en position de destruction de l'ampoule et, en position de travail, à libérer la force élastique de rappel de la vis en position de destruction de l'ampoule.

### Résumé de l'invention

L'invention a notamment pour but de fournir un dispositif de sécurité pour un réservoir destiné à contenir un gaz sous pression qui soit plus sûr, notamment en présence d'une source de chaleur.

À cet effet, l'invention a pour objet un dispositif de sécurité pour un réservoir destiné à contenir un gaz sous pression, comprenant :
- un canal d'aération destiné à mettre en communication fluidique un volume interne délimité par le réservoir et l'extérieur du réservoir,
- un piston de sécurité mobile entre une position d'obturation dans laquelle il obture le canal d'aération, et une position de sécurité dans laquelle il n'obture pas le canal d'aération,
- un premier organe de sécurité déformable configuré pour maintenir le piston de sécurité en position d'obturation à l'encontre d'une force élastique de rappel du piston de sécurité en position de sécurité,
le dispositif de sécurité comprenant en outre :
- des moyens de déformation destinés à déformer le premier organe de sécurité, les moyens de déformation étant mobiles entre une position de repos et une position de déformation du premier organe de sécurité, et
- au moins un deuxième organe de sécurité destiné, en position de repos, à maintenir les moyens de déformation en position de repos à l'encontre d'une force élastique de rappel des moyens de déformation en position de déformation du premier organe de sécurité lorsque le deuxième organe de sécurité est soumis à une température inférieure à une température prédéterminée, et, en position de travail, à libérer la force élastique de rappel des moyens de déformation en position de déformation du premier organe de sécurité lorsque le deuxième organe de sécurité est soumis à une température supérieure à la température prédéterminée, dans lequel le deuxième organe de sécurité est formé par un câble de sécurité réalisé en un matériau ayant une faible résistance mécanique au feu.

Ainsi, lorsque le deuxième organe de sécurité est soumis à une température supérieure à la température prédéterminée, par exemple lorsqu'une flamme est au contact ou à proximité du deuxième organe de sécurité, les moyens de déformation passent de leur position de repos à leur position de déformation du premier organe de sécurité et déforment en conséquence le premier organe de sécurité de manière à ce qu'il ne remplisse plus sa fonction de maintien du piston de sécurité en position d'obturation. En conséquence, la force élastique de rappel du piston de sécurité en position de sécurité entraine le rappel élastique du piston de sécurité en position de sécurité, mettant ainsi en communication fluidique l'intérieur et l'extérieur du réservoir, de sorte que le gaz contenu dans le réservoir s'échappe par le canal d'aération vers l'extérieur du réservoir. De cette manière, on évite de manière simple et économique une augmentation de pression à l'intérieur du réservoir en présence d'une source de chaleur ayant une température supérieure à la température prédéterminée. On remarque que c'est le passage du deuxième organe de sécurité de sa position de repos à sa position de travail qui permet l'actionnement du dispositif de sécurité et que, pour cela, il n'est pas nécessaire que de l'énergie thermique soit transmise au premier organe de sécurité, ce qui est avantageux. En outre, la mise en oeuvre de moyens de rappel élastique pour réaliser le déplacement du piston d'obturation vers sa position de sécurité et des moyens de déformation vers leur position de déformation du premier organe de sécurité est avantageuse en ce qu'elle est simple à mettre en oeuvre, robuste, et économique. L'utilisation d'un deuxième organe de sécurité en tant qu'élément détecteur est avantageuse en ce qu'elle permet de s'affranchir de la nécessité pour le premier organe de sécurité d'être positionné au plus près de la source de chaleur pour que le dispositif de sécurité soit mis en oeuvre.

Par « premier organe de sécurité déformable », on comprend que le premier organe de sécurité peut être déformé sous l'action des moyens de déformation, par exemple par pliage ou destruction. La déformation est de nature à ne plus permettre au premier organe de sécurité de remplir sa fonction de maintien du piston de sécurité en position d'obturation. Lorsque cette fonction n'est plus remplie, on comprend que la force élastique de rappel du piston de sécurité en position de sécurité est alors mise en oeuvre pour déplacer le piston de sécurité en position de sécurité.

La température prédéterminée est choisie, entre autres, en fonction des caractéristiques du réservoir et/ou du gaz que le réservoir est destiné à stocker. Elle est choisie de manière à ce qu'une exposition prolongée du réservoir à une température inférieure à la température prédéterminée, quelque soit la durée d'exposition, n'augmente pas la pression à l'intérieur du réservoir à un niveau tel que le risque d'explosion du réservoir est élevé. Autrement dit, elle est choisie de manière à ce qu'une exposition prolongée, c'est-à-dire de plusieurs minutes, par exemple entre cinq et soixante minutes, à une température supérieure à la température prédéterminée soit suffisante pour engendrer une augmentation de la pression à l'intérieur du réservoir de nature à augmenter de manière significative le risque d'explosion du réservoir. La température prédéterminée, en fonction des caractéristiques du réservoir et/ou du gaz à stocker, est typiquement comprise entre 95°C et 150°C, par exemple entre 100°C et 130°C, de préférence entre 100°C et 120°C. La température prédéterminée est choisie dans cette gamme de température de manière à être suffisamment faible pour provoquer l'actionnement du dispositif de sécurité lorsque cela est nécessaire, c'est-à-dire lorsqu'un risque crédible d'explosion du réservoir existe, et suffisamment élevée pour ne pas déclencher le dispositif de sécurité, et donc provoquer la perte du contenu stocké dans le réservoir, alors qu'il n'existe pas de risque sérieux d'explosion du réservoir. Cette gamme de température permet typiquement de détecter la présence d'une flamme à proximité du réservoir.

La résistance mécanique au feu d'un élément traduit le temps pendant lequel, lors d'une exposition à un feu, cet élément continue à remplir sa fonction. On comprend ainsi que plus la résistance mécanique au feu d'un élément est faible, plus rapidement cet élément cessera de remplir sa fonction lorsqu'il est exposé au feu. Dans le cas présent, cette valeur traduit le temps pendant lequel le deuxième organe de sécurité maintient les moyens de déformation en position de repos lorsqu'il est exposé à une température supérieure à la température prédéterminée. Ce temps étant faible, on comprend que l'élément cessera de remplir sa fonction rapidement lors d'une exposition à une température supérieure à la température prédéterminée. On réduit ainsi le risque que, pendant le temps de résistance au feu, la pression à l'intérieur du réservoir augmente de manière à engendrer un risque d'explosion du réservoir.

L'utilisation d'un câble de sécurité en tant que deuxième organe de sécurité est un moyen simple et économique de réaliser le deuxième organe de sécurité.

L'invention peut également comporter l'une ou plusieurs des caractéristiques optionnelles suivantes, prises seules ou en combinaison.

Le premier organe de sécurité est frangible. Selon ce mode de réalisation, la déformation provoquée par les moyens de déformation est avantageusement une destruction du premier organe de sécurité. Cette destruction permet d'assurer, plus encore qu'un pliage, que le premier organe de sécurité ne puisse plus remplir sa fonction de maintien du piston de sécurité en position d'obturation. Le dispositif de sécurité est ainsi plus fiable. Par « organe de sécurité frangible » on comprend qu'il s'agit d'un organe de sécurité conçu pour être facilement détruit par les moyens de déformation lorsque ceux-ci passent en position de déformation - pouvant être également appelée ici position de destruction - du premier organe de sécurité.

Le premier organe de sécurité est formé par une ampoule en verre. Il s'agit d'un mode de réalisation simple est économique pour le premier organe de sécurité. Une ampoule en verre est aisément frangible avec de nombreux moyens de déformation différents qui sont également simples et économiques à mettre en oeuvre.

Selon un mode de réalisation, l'ampoule en verre contient un fluide, le fluide étant destiné à exercer une pression sur l'ampoule lorsqu'il est soumis à une température supérieure à la température prédéterminée de manière à briser l'ampoule. De cette manière, l'ampoule peut à la fois être brisée par les moyens de déformation lorsque le deuxième organe de sécurité est soumis à une température supérieure à la température prédéterminée et être brisée lorsqu'elle est elle-même soumise à une température supérieure à la température prédéterminée. On obtient ainsi un double niveau de détection d'un risque pour la sécurité du réservoir puisque le deuxième organe de sécurité permet de détecter une source de chaleur située à distance de l'ampoule en verre et l'ampoule en verre permet de détecter une source de chaleur située à sa proximité. La zone de détection d'une source de chaleur couverte par le dispositif de sécurité est donc plus étendue.

Le premier organe de sécurité est fusible lorsqu'il est soumis à une température supérieure à la température prédéterminée. De cette manière, lorsque le premier organe de sécurité est soumis à une température supérieure à la température prédéterminée il fond et ne peut plus remplir sa fonction de maintien du piston de sécurité en position d'obturation. On obtient ainsi un double niveau de détection d'un risque pour la sécurité du réservoir puisque le deuxième organe de sécurité permet de détecter une source de chaleur située à distance du premier organe de sécurité et le premier organe de sécurité fusible permet de détecter une source de chaleur située à sa proximité. La zone de détection d'une source de chaleur couverte par le dispositif de sécurité est donc plus étendue.

La force élastique de rappel des moyens de déformation en position de déformation du premier organe de sécurité est fournie par un ressort en appui sur un siège d'appui présentant un orifice configuré pour permettre le passage du deuxième organe de sécurité. C'est un moyen simple, fiable et compact d'obtenir la force élastique de rappel des moyens de déformation en position de déformation du premier organe de sécurité.

De préférence, au moins une partie de l'orifice du siège d'appui du ressort est composée et/ou recouverte de moyens de lubrification. Les déplacements du deuxième organe de sécurité à travers l'orifice du siège d'appui sont ainsi facilités. Cela est particulièrement avantageux en ce qu'on réduit le risque que des frottements entre le deuxième organe de sécurité et l'orifice du siège d'appui freinent la libération de la force de rappel élastique des moyens de déformation en position de déformation du premier organe de sécurité. Si un tel ralentissement a lieu, il existe un risque que les moyens de déformation atteignent le premier organe de sécurité avec une énergie cinétique insuffisante pour permettre la déformation, par exemple la destruction ou le pliage, du premier organe de sécurité. Dans une telle situation, la mise en oeuvre du dispositif de sécurité pourrait ne pas être possible et donc entrainer un risque d'explosion du réservoir. Les moyens de lubrification peuvent être de toute nature compatible avec le fonctionnement du dispositif de sécurité. Par exemple, les moyens de lubrification peuvent être solides, liquides ou pâteux.

Le piston de sécurité présente un logement configuré pour accueillir au moins une partie des moyens de déformation lorsque le piston de sécurité est en position de sécurité et les moyens de déformation sont en position de déformation du premier organe de sécurité. On réduit ainsi le risque que l'encombrement des moyens de déformation en position de déformation du premier organe de sécurité empêche le passage du piston de sécurité en position de sécurité, ce qui entrainerait un risque d'explosion du réservoir.

Les moyens de déformation comprennent un élément de frappe. Un élément de frappe est un élément des moyens de déformation destiné à venir au contact du premier organe de sécurité afin de le déformer, de préférence en le détruisant. Il peut ainsi présenter toute forme compatible avec cette fonction. L'élément de frappe prend par exemple la forme d'un pointeau, d'une baïonnette, d'une flèche ou d'une lame. De préférence, l'élément de frappe est une lame. Cette forme est avantageuse en ce qu'elle est peu encombrante et efficace pour déformer, voire détruire, le premier organe de sécurité. On remarque notamment qu'une lame, tout en présentant une épaisseur très réduite, caractéristique d'une lame, peut être suffisamment étendue pour couvrir toute une largeur du premier organe de sécurité. La lame présente en outre l'avantage d'avoir un coefficient de trainée faible, elle n'est donc pas susceptible de ralentir le déplacement des moyens de déformation depuis leur position de repos vers leur position de déformation du premier organe de sécurité.

Le deuxième organe de sécurité comprend un élément élastique. Le deuxième organe de sécurité est ainsi capable de compenser d'éventuelles variation de la taille du réservoir en fonction de son taux de remplissage. Par exemple, le deuxième organe de sécurité comprend un élément réalisé en caoutchouc. Selon les modes de réalisation, le caoutchouc peut être naturel ou synthétique. Dans un autre exemple, le deuxième organe de sécurité comprend un ressort de traction. Selon les modes de réalisation, le ressort de traction peut être un fil d'acier rond enroulé.

La longueur du câble de sécurité est comprise entre 1 m et 10 m, de préférence entre 1 m et 3 m. De cette manière, le câble de sécurité est susceptible de couvrir une plus grande partie de la longueur d'un réservoir de grande taille. Ainsi, le câble est susceptible de détecter une source de chaleur sur une zone plus étendue, même pour un réservoir de grande taille. De préférence, la longueur du câble de sécurité est choisie de manière à pouvoir s'étendre sur toute la longueur du réservoir.

Le câble de sécurité est réalisé en un matériau classé D selon la norme européenne EN 13501-1 ou en un matériau classé M3 ou M4 selon la norme française NF P92-507. Il est entendu qu'il est fait référence à ces normes dans leurs versions en vigueur au moment du dépôt de la présente demande. De tels matériaux ont une faible résistance mécanique au feu et permettent, lorsqu'ils sont soumis à une température supérieure à la température prédéterminée, d'assurer que les moyens de déformation passent de leur position de repos à leur position de déformation du premier organe de sécurité et déforment en conséquence le premier organe de sécurité de manière à ce qu'il ne remplisse plus sa fonction de maintien du piston de sécurité en position d'obturation

Le câble de sécurité est réalisé en un matériau choisi dans le groupe constitué par les caoutchoucs, les polyamides, les laines, les polyesters, les polyéthylènes haute densité de préférence de haut poids moléculaire, les polypropylènes, et des combinaisons de ceux-ci. Ces matériaux présentent tous une faible résistance mécanique au feu et sont simples et économiques à utiliser.

De préférence, le câble de sécurité est réalisé en polypropylène. Un câble réalisé en polypropylène est plus rigide et moins sensible au fluage, au vieillissement thermique et à l'humidité qu'un câble de sécurité réalisé en un matériau choisi dans la liste des matériaux mentionnée précédemment. La fiabilité du dispositif de sécurité est ainsi améliorée.

On peut prévoir que le matériau utilisé pour réaliser le câble de sécurité soit un matériau composite chargé avec des fibres telles que des fibres de verre, des fibres de carbone, des fibres de graphite, des fibres d'aramide, des fibres de basalte, des fibres minérales ou des équivalents. Cette charge permet avantageusement de stabiliser les propriétés mécaniques du câble de sécurité, assurant ainsi la fiabilité du câble de sécurité dans le temps de manière à augmenter la durée de vie du dispositif de sécurité.

On peut également prévoir que le matériau utilisé pour réaliser le câble de sécurité est recouvert avec un autre matériau. Ainsi, d'autres propriétés mécaniques peuvent être apportées au câble de sécurité. Par exemple, un câble réalisé en polyamide est plus sensible à l'humidité et cet inconvénient peut être réduit en recouvrant le câble de sécurité avec un matériau qui est moins sensible à l'humidité.

Le câble de sécurité est réalisé en un matériau ayant une résistance mécanique au feu comprise entre 10 secondes et 1 heure, de préférence entre 1 minute et 45 minutes, de préférence encore entre 10 minutes et 30 minutes. Cette valeur traduit le temps pendant lequel le câble de sécurité maintient les moyens de déformation en position de repos lorsqu'il est exposé à une température supérieure à la température prédéterminée. Ce temps étant faible, on comprend que le câble de sécurité cessera de remplir sa fonction rapidement lors d'une exposition à une température supérieure à la température prédéterminée. On réduit ainsi le risque que, pendant le temps de résistance au feu, la pression à l'intérieur du réservoir augmente de manière à engendrer un risque d'explosion du réservoir.

Le deuxième organe de sécurité est couplé aux moyens de déformation par un troisième organe de sécurité destiné à coopérer avec le deuxième organe de sécurité de manière à maintenir le deuxième organe de sécurité en position de repos lorsque le deuxième organe de sécurité est soumis à une température inférieure à la température prédéterminée et à rappeler élastiquement le deuxième organe de sécurité en position de travail lorsque le deuxième organe de sécurité est soumis à une température supérieure à la température prédéterminée. Ce mode de réalisation est avantageux en ce qu'il permet de créer un effet de seuil pour le passage du deuxième organe de sécurité de sa position de repos à sa position de travail et donc pour le passage des moyens de déformation de leur position de repos à leur position de déformation du premier organe de sécurité. Ainsi, le risque que les moyens de déformation arrivent au contact du premier organe de sécurité avec une énergie cinétique insuffisante pour déformer, par exemple plier ou détruire, le premier organe de sécurité est réduit. On augmente ainsi la fiabilité du dispositif de sécurité.

L'invention a également pour objet un kit pour la fabrication d'un dispositif de sécurité tel que décrit ci-dessus, comprenant un deuxième organe de sécurité et un troisième organe de sécurité, le deuxième organe de sécurité et le troisième organe de sécurité étant destinés à être rapportés sur un boitier du dispositif de sécurité comprenant le canal d'aération, le piston de sécurité et le premier organe de sécurité du dispositif de sécurité. Un tel kit permet avantageusement de mettre en oeuvre aisément et rapidement le mode de réalisation décrit ci-dessus dans lequel le deuxième organe de sécurité est couplé aux moyens de déformation par le troisième organe de sécurité. Ainsi, il est possible de rapporter le deuxième organe de sécurité et le troisième organe de sécurité de ce mode de réalisation sur le corps d'un dispositif de sécurité selon l'invention afin de mettre en oeuvre ce mode de réalisation lorsqu'on souhaite bénéficier des avantages offerts par ce mode de réalisation.

L'invention a également pour objet un réservoir destiné à contenir un gaz sous pression équipé d'un dispositif de sécurité tel que décrit précédemment. Comme expliqué précédemment, un tel réservoir est plus sûr qu'un réservoir équipé d'un dispositif de sécurité de l'art antérieur.

On décrit également un véhicule automobile comprenant un réservoir tel que décrit précédemment. Le réservoir est typiquement un réservoir de carburant, par exemple un réservoir à dihydrogène.

Enfin, l'invention a pour objet un procédé de fabrication d'un dispositif de sécurité tel que décrit précédemment, dans lequel on met en oeuvre les étapes suivantes :
- on fixe les moyens de déformation sur un boitier comprenant le canal d'aération, le piston de sécurité et le premier organe de sécurité, et
- on fixe le deuxième organe de sécurité sur le boîtier.

### Brève description des figures

L'invention sera mieux comprise à la lecture de la description qui va suivre donnée uniquement à titre d'exemples non limitatifs en se référant aux dessins annexés dans lesquels :
[Fig. 1] est une vue schématique d'un véhicule automobile comprenant un réservoir muni d'un dispositif de sécurité selon l'invention ;
[Fig. 2] est une vue schématique en coupe d'un premier mode de réalisation du dispositif de sécurité selon l'invention représenté en position de repos (A) et en position de sécurité (B) ; et
[Fig. 3] est une vue schématique en coupe d'un deuxième mode de réalisation du dispositif de sécurité selon l'invention représenté en position de repos (A) et en position de sécurité (B).
[Fig. 4] est une vue schématique de dessus des moyens de fixation du deuxième organe de sécurité aux moyens de déformation selon le deuxième mode de réalisation.

### Description détaillée

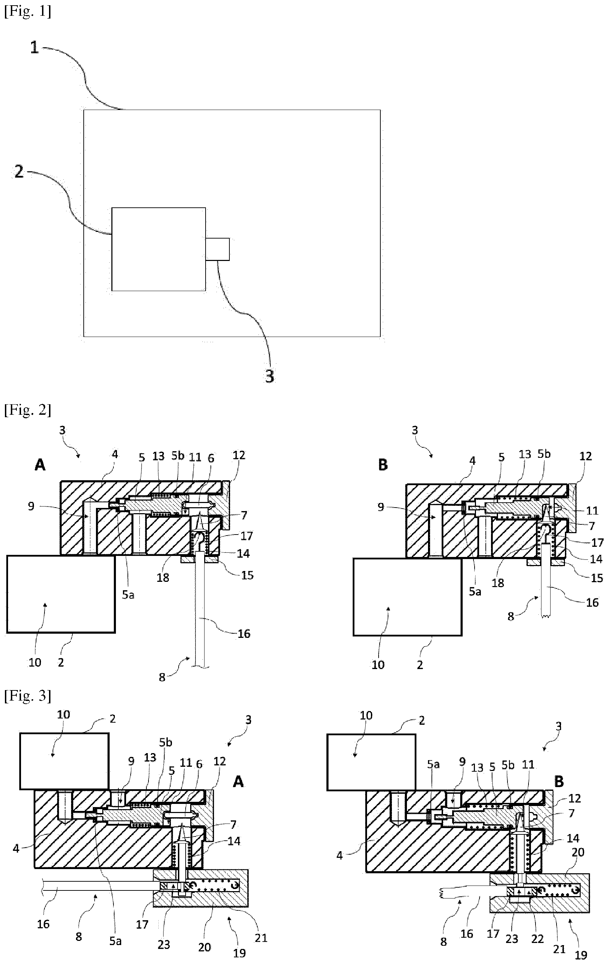

On a représenté sur les figures 1 à 4 deux modes de réalisation d'un dispositif de sécurité selon l'invention.

La figure 1 représente de manière schématique un véhicule 1 automobile comprenant un réservoir 2 destiné à contenir un gaz sous pression équipé d'un dispositif 3 de sécurité selon l'invention.

Dans le cas présent, le réservoir 2 est destiné à contenir du carburant pour le véhicule 1 automobile, plus particulièrement le réservoir 2 est destiné à contenir du dihydrogène compressé, typiquement entre 300 et 700 bars. Un seul dispositif 3 de sécurité est représenté sur la figure 1. Selon d'autres modes de réalisation, le nombre de dispositif 3 de sécurité équipant le réservoir est plus importante, par exemple compris entre deux et vingt. On peut prévoir selon d'autres modes de réalisation que le dispositif 3 de sécurité équipe des réservoirs autres que des réservoirs de carburant ou des réservoirs à dihydrogène.

La figure 2 représente un premier mode de réalisation d'un dispositif 3 de sécurité selon l'invention dans lequel le dispositif 3 de sécurité est représenté en position de repos (figure 2A) et en position de sécurité (figure 2B).

Le dispositif 3 de sécurité comprend un corps ou boitier 4 sur lequel sont montés un piston 5 de sécurité, un premier organe 6 de sécurité, des moyens 7 de déformation et un deuxième organe 8 de sécurité.

Le boitier 4 comprend un canal 9 d'aération destiné à mettre en communication fluidique un volume interne 10 délimité par le réservoir 2 et l'extérieur du réservoir 2. Une première extrémité du canal 9 d'aération débouche dans le volume interne 10 du réservoir 2 et une deuxième extrémité du canal 9 d'aération débouche à l'extérieur du réservoir 2.

Le piston 5 de sécurité est monté glissant à l'intérieur du canal 9 d'aération en étant mobile entre une position d'obturation dans laquelle il obture le canal 9 d'aération (figure 2A), et une position de sécurité dans laquelle il n'obture pas le canal 9 d'aération (figure 2B). Autrement dit, en position d'obturation le piston 5 de sécurité empêche la communication fluidique entre le volume interne 10 et l'extérieur du réservoir 2. Dans la position d'obturation, un joint 5a d'étanchéité agencé entre le piston 5 de sécurité et une paroi interne du canal 9 d'aération coopère avec une partie du piston 5 de sécurité pour empêcher le gaz présent dans le volume interne 10 de s'échapper par le canal 9 d'aération. En position de sécurité, le piston 5 de sécurité n'obture plus, au moins en partie, le canal 9 d'aération de sorte que le volume interne 10 du réservoir 2 est en communication fluidique avec l'extérieur du réservoir. Dans la position de sécurité, le joint 5a d'étanchéité ne coopère plus avec le piston 5 de sécurité pour réaliser l'étanchéité du canal 9 d'aération, en conséquence, le gaz sous pression présent dans le volume interne 10 s'échappe via le canal 9 d'aération. Le joint d'étanchéité permet d'améliorer l'étanchéité de l'obturation du canal 9 d'aération par le piston 5 de sécurité. On peut prévoir, selon une alternative de réalisation, que le dispositif 3 de sécurité ne comprend pas de joint 5a d'étanchéité. Une bague 5b de glissement montée sur le piston 5 de sécurité permet de guider le glissement du piston 5 de sécurité entre la position d'obturation et la position de sécurité. Le piston 5 de sécurité est usiné de manière à présenter un logement 11 creux.

Le premier organe 6 de sécurité est déformable. Il est configuré pour maintenir le piston 5 de sécurité en position d'obturation à l'encontre d'une force élastique de rappel du piston 5 de sécurité en position de sécurité. Dans le cas présent, le premier organe 6 de sécurité est frangible et est formé par une ampoule en verre contenant un fluide destiné à exercer une pression sur l'ampoule de manière à la briser lorsqu'il est soumis à une température prédéterminée. Le premier organe 6 de sécurité maintient le piston 5 de sécurité en position d'obturation en étant disposé entre le piston 5 de sécurité et un point 12 fixe. L'ampoule en verre est ainsi dimensionnée pour plaquer le piston 5 de sécurité en position d'obturation tant qu'elle n'est pas brisée. Selon un autre mode de réalisation, le premier organe 6 de sécurité est fusible lorsqu'il est soumis à la température prédéterminée. Dans le cas présent, la température prédéterminée est comprise entre 95°C et 150°C.

La force élastique de rappel du piston 5 de sécurité en position de sécurité est portée par un ressort 13 en compression. En position d'obturation, le ressort 13 est comprimé par le piston 5 de sécurité sous l'action du premier organe 6 de sécurité (figure 2A). Selon d'autres modes de réalisation, la force élastique de rappel du piston 5 de sécurité en position de sécurité peut être portée par un organe autre qu'un ressort 13 en compression.

Les moyens 7 de déformation sont destinés à déformer le premier organe 6 de sécurité. Dans le cas présent, cette déformation consiste en une destruction de l'ampoule en verre. Les moyens 7 de déformation sont mobiles entre une position de repos (figure 2A) et une position de déformation du premier organe 6 de sécurité (figure 2B), c'est-à-dire dans le cas présent une position de destruction de l'ampoule en verre (l'ampoule détruite n'est pas représentée). Les moyens 7 de déformation comprennent un élément de frappe en forme de pointeau. L'élément de frappe est la partie des moyens 7 de déformation qui est destinée à venir au contact du premier organe 6 de sécurité afin de le déformer, c'est-à-dire de le détruire dans le cas présent. Selon d'autres modes de réalisation, l'élément de frappe est différent et a, par exemple, la forme d'une baïonnette, d'une flèche ou d'une lame.

Le logement 11 du piston 5 de sécurité est configuré pour accueillir au moins une partie des moyens 7 de déformation lorsque le piston 5 de sécurité est en position de sécurité et les moyens 7 de déformation sont en position de déformation (figure 2B), de manière à ce que les moyens 7 de déformation ne perturbent pas le passage du piston 5 de sécurité en position de sécurité.

L'élément de frappe des moyens 7 de déformation repose sur un ressort 14 en compression qui rappelle élastiquement l'élément de frappe en position de déformation du premier organe 6 de sécurité. Le ressort 14 et l'élément de frappe sont logés dans un logement du boitier 4 du dispositif 3 de sécurité. Ce logement débouche sur une ouverture extérieure du boitier 4 du dispositif 3 de sécurité. Une rondelle 15 est fixée au niveau de l'ouverture extérieure du logement et forme un siège d'appui pour le ressort 14. La rondelle 15 a une forme annulaire présentant un orifice central traversant. Au moins une partie de l'orifice de la rondelle 15 est composée et/ou recouverte de moyens de lubrification. Les moyens de lubrification peuvent être solides, liquides ou pâteux. Les moyens de lubrification sont par exemple de la graisse, une huile de lubrification ou un revêtement anti-adhésif solide tel que du Téflon ^{®}.

Le deuxième organe 8 de sécurité est formé par un câble 16 de sécurité d'une longueur de deux mètres qui correspond sensiblement à la longueur du réservoir 2. Selon d'autres modes de réalisation, la longueur du câble 16 de sécurité est différente, par exemple comprise entre un mètre et dix mètres, de préférence entre un mètre et trois mètres. Avantageusement, la longueur du câble 16 de sécurité est choisie pour correspondre sensiblement à la longueur du réservoir 2. La câble 16 de sécurité est réalisé en un matériau ayant une faible résistance mécanique au feu. Typiquement, le câble 16 de sécurité est réalisé en un matériau classé D selon la norme européenne EN 13501-1 ou en un matériau classé M3 ou M4 selon la norme française NF P92-507. Par exemple, le câble 16 de sécurité est réalisé en caoutchouc, en polyamide, en laine, en polyester ou en polypropylène. Le matériau utilisé pour le câble 16 de sécurité est notamment choisi en fonction de la température prédéterminée. Ainsi, le câble de sécurité doit se rompre s'il est soumis à une température supérieure à la température prédéterminée pendant une durée prédéterminée, par exemple une durée comprise entre 10 secondes et 1 heure, de préférence entre 1 minute et 45 minutes, de préférence encore entre 10 minutes et 30 minutes. Avantageusement, le câble 16 de sécurité est réalisé en un matériau élastique, tel que du caoutchouc, afin de compenser les éventuelles modifications de dimension du réservoir en fonction de son remplissage.

Le câble 16 de sécurité est tendu entre d'une part un point de fixation statique (non représenté) et d'autre part des moyens 17 de fixation aux moyens 7 de déformation. Selon ce premier mode de réalisation, les moyens 17 de fixation aux moyens 7 de déformation sont formés par un crochet destiné à s'accrocher à l'élément de frappe des moyens 7 de déformation. Pour cela, l'élément de frappe présente un anneau 18 dimensionné pour accueillir le crochet. Selon d'autres modes de réalisation, la fixation du câble 16 de sécurité aux moyens 7 de déformation est réalisée différemment, par exemple par collage, par sertissage, par clipsage ou par soudage.

Le deuxième organe 8 de sécurité est destiné, en position de repos (figure 2A), à maintenir les moyens 7 de déformation en position de repos à l'encontre d'une force élastique de rappel des moyens 7 de déformation en position de déformation du premier organe 6 de sécurité lorsque le deuxième organe 8 de sécurité est soumis à une température inférieure à la température prédéterminée, et, en position de travail (figure 2B), à libérer la force élastique de rappel des moyens 7 de déformation en position de déformation du premier organe 6 de sécurité lorsque le deuxième organe 8 de sécurité est soumis à une température supérieure à la température prédéterminée.

La force élastique de rappel des moyens 7 de déformation en position de déformation est fournie par le ressort 14 en compression. Ainsi, dans le présent mode de réalisation, le câble 16 de sécurité est, en position de repos, tendu de manière à comprimer le ressort 14 et à maintenir les moyens de déformation en position de repos (figure 2A). En position de travail, le câble 16 de sécurité ne comprime plus le ressort 14 et libère ainsi sa force élastique de rappel des moyens 7 de déformation en position de déformation (figure 2B).

L'orifice de la rondelle 15 formant siège d'appui pour le ressort 14 est configuré pour permettre le passage du deuxième organe 8 de sécurité, et plus particulièrement du câble 16 de sécurité. Le déplacement du câble 16 de sécurité par rapport à la rondelle 15 est avantageusement facilité par la présence des moyens de lubrification au niveau de l'orifice de la rondelle. Ainsi, on réduit le risque que des frottements entre le câble 16 de sécurité et l'orifice de la rondelle 15 entrainent une diminution de l'énergie cinétique avec laquelle les moyens 7 de déformation arrivent en position de déformation du premier organe 6 de sécurité, une telle diminution de l'énergie cinétique étant susceptible d'empêcher la déformation du premier organe 6 de sécurité et donc de rendre le dispositif 3 de sécurité inopérant.

On décrit ci-après un exemple de fonctionnement du dispositif 3 de sécurité selon le premier mode de réalisation de l'invention.

Dans un premier temps, le réservoir 2 n'est soumis à aucune source de chaleur, le dispositif 3 de sécurité est donc en position de repos (figure 2A). Ainsi, le câble 16 de sécurité est intact et maintient l'élément de frappe des moyens 7 de déformation en position de repos à l'encontre de la force élastique de rappel des moyens 7 de déformation en position de déformation fournie par le ressort 14. Le premier organe 6 de sécurité n'est pas déformé, c'est-à-dire, dans le cas présent, que l'ampoule en verre n'est pas brisée. Le premier organe 6 de sécurité maintient donc le piston 5 de sécurité en position d'obturation du canal 9 d'aération. Le volume interne 10 du réservoir 2 n'est ainsi pas en communication fluidique avec l'extérieur du réservoir 2.

Dans un second temps, une partie du réservoir 2 est soumise à une source de chaleur ayant une température supérieure à la température prédéterminée. Par exemple, dans le cas où la température prédéterminée est de 100°C, cette partie du réservoir est soumise à une source de chaleur ayant une température de 110°C. Cette source de chaleur est par exemple formée par une flamme. Puisque le câble 16 de sécurité s'étend sur toute la longueur du réservoir 2, il est soumis à la source de chaleur quelle que soit sa position le long du réservoir 2. La température à laquelle le câble 16 de sécurité est soumis étant supérieure à la température prédéterminée, le câble 16 de sécurité est brulé et se rompt, passant ainsi en position de travail dans laquelle il ne maintient plus l'élément de frappe des moyens 7 de déformation en position de repos et libère la force élastique de rappel du ressort 14 de sorte que l'élément de frappe est propulsé par le ressort 14 en position de déformation. Lorsque l'élément de frappe des moyens 7 de déformation arrive au contact de l'ampoule en verre du premier organe 6 de sécurité, il a une énergie cinétique, fournie par le ressort 14, suffisante pour briser l'ampoule en verre. L'ampoule étant brisée, le premier organe 6 de sécurité ne maintient plus le piston 5 de sécurité en position d'obturation et le ressort 13 le déplace en position de sécurité. Dans le cas présent, le déplacement complet jusqu'en position de sécurité est facilité par la présence du logement 11 du piston 5 de sécurité qui est configuré pour accueillir au moins une partie de l'élément de frappe des moyens 7 de déformation. Le passage du piston 5 de sécurité en position de sécurité permet de libérer le canal 9 d'aération de manière à mettre le volume interne 10 du réservoir 2 en communication fluidique avec l'extérieur du réservoir 2. Le gaz contenu dans le réservoir 2 s'échappe donc vers l'extérieur par le canal 9 d'aération ce qui évite une augmentation de pression à l'intérieur du réservoir 2 qui serait susceptible d'entrainer l'explosion de celui-ci. Le dispositif 3 de sécurité permet ainsi d'obtenir un réservoir 2 plus sûr, pour lequel le risque d'explosion en présence d'une source de chaleur est réduit.

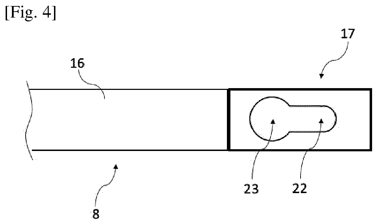

On décrit ci-après, en référence aux figures 3 et 4, un deuxième mode de réalisation de l'invention.

Pour ce deuxième mode de réalisation, les mêmes références numériques sont utilisées pour les éléments homologues à ceux du premier mode de réalisation.

Nous décrivons ci-après principalement les différences par rapport au premier mode de réalisation. Pour les éléments identiques, il faudra se référer à leur description effectuée ci-dessus pour le premier mode de réalisation.

Selon le deuxième mode de réalisation, le dispositif 3 de sécurité comprend un troisième organe 19 de sécurité destiné à coopérer avec le deuxième organe 8 de sécurité de manière à maintenir le deuxième organe 8 de sécurité en position de repos (figure 3A) lorsque le deuxième organe 8 de sécurité est soumis à une température inférieure à la température prédéterminée et à rappeler élastiquement le deuxième organe 8 de sécurité en position de travail (figure 3B) lorsque le deuxième organe 8 de sécurité est soumis à une température supérieure à la température prédéterminée.

Le troisième organe 19 de sécurité comprend un corps 20 et un ressort 21 de traction. Le corps 20 a une forme de boitier creux. Il est fixé au boitier 4 du dispositif 3 de sécurité au niveau de l'orifice extérieur du logement comprenant l'élément de frappe et le ressort 14. Dans le deuxième mode de réalisation, le corps 20 remplit la fonction de siège d'appui pour le ressort 14 qui est remplie par la rondelle 15 dans le premier mode de réalisation. Le ressort 21 de traction est logé à l'intérieur du corps 20 et est fixé d'une part à une paroi interne du corps 20 et d'autre part aux moyens 17 de fixation du deuxième organe 8 de sécurité aux moyens 7 de déformation. Le ressort 21 fournit la force de rappel élastique du deuxième organe 8 de sécurité en position de travail.

Les moyens 17 de fixation du deuxième organe 8 de sécurité aux moyens 7 de déformation sont différents de ceux du premier mode de réalisation. Ils comprennent, à la place du crochet, un organe de liaison comprenant deux orifices se succédant l'un à l'autre le long de l'organe de liaison, les deux orifices étant communiquant. Le premier orifice, appelé orifice 22 de repos, présente une largeur inférieure à celle du deuxième orifice, appelé orifice 23 de travail (figure 4).

L'élément de frappe des moyens 7 de déformation est légèrement différent de celui du premier mode de réalisation. Il comprend une extrémité de liaison avec l'organe de liaison qui est allongée et présente une portion avec un diamètre réduit apte à être logé dans l'orifice 22 de repos. L'élément de frappe est dimensionné pour ne pas être mobile en translation le long de sa direction longitudinale lorsque sa portion réduite est logée dans l'orifice 22 de repos. L'élément de frappe est en outre dimensionné pour être mobile en translation le long de sa direction longitudinale lorsque sa portion réduite est logée dans l'orifice 23 de travail.

En position de repos, le câble 16 de sécurité est tendu entre son extrémité fixe et son extrémité liée aux moyens 17 de fixation aux moyens 7 de déformation. Le troisième organe 19 de sécurité est configuré pour que la tension de repos du câble 16 de sécurité et la force élastique de rappel du deuxième organe 8 de sécurité en position de travail fournie par le ressort 21 de traction coopèrent pour maintenir le deuxième organe 8 de sécurité en position de repos. Dans cette position, la portion réduite de l'élément de frappe est logée dans l'orifice 22 de repos de sorte que le deuxième organe 8 de sécurité maintient l'élément de frappe en position de repos empêchant sa translation longitudinale et en comprimant le ressort 14 de compression.

On décrit ci-après un exemple de fonctionnement du dispositif 3 de sécurité selon le deuxième mode de réalisation de l'invention.

Dans un premier temps, le réservoir 2 n'est soumis à aucune source de chaleur, le dispositif 3 de sécurité est donc en position de repos (figure 3A). Le câble 16 de sécurité est intact et maintient l'élément de frappe des moyens 7 de déformation en position de repos à l'encontre de la force élastique de rappel des moyens 7 de déformation en position de déformation fournie par le ressort 14. Ce maintien est obtenu car l'élément de frappe est logé dans l'orifice 22 de repos et n'est donc pas mobile en translation le long de sa direction longitudinale. Le premier organe 6 de sécurité n'est pas déformé, c'est-à-dire, dans le cas présent, que l'ampoule en verre n'est pas brisée. Le premier organe 6 de sécurité maintient donc le piston 5 de sécurité en position d'obturation du canal 9 d'aération. Le volume interne 10 du réservoir 2 n'est ainsi pas en communication fluidique avec l'extérieur du réservoir 2.

Dans un second temps, le réservoir 2 est soumis à une source de chaleur ayant une température supérieure à la température prédéterminée. Par exemple, dans le cas où la température prédéterminée est de 100°C, le réservoir est soumis à une source de chaleur ayant une température de 110°C. Cette source de chaleur est par exemple formée par une flamme. Puisque le câble 16 de sécurité s'étend sur toute la longueur du réservoir 2, il est soumis à la source de chaleur quelle que soit sa position le long du réservoir 2. La température à laquelle le câble 16 de sécurité est soumis étant supérieure à la température prédéterminée, le câble 16 de sécurité est brulé et se rompt. En conséquence, la tension du câble 16 de sécurité ne lui permet plus d'être maintenu en position de repos et le ressort 21 de traction rappelle élastiquement le deuxième organe 8 de sécurité en position de travail. Lors de ce passage en position de travail, la portion réduite de l'élément de frappe qui était jusque-là logée dans l'orifice 22 de repos, se retrouve, du fait du déplacement de l'organe de liaison fixé au câble 16 de sécurité, logé dans l'orifice 23 de travail. La translation longitudinale de l'élément de frappe est alors permise car le deuxième organe 8 de sécurité ne le maintient plus en position de repos et libère la force élastique de rappel du ressort 14 de sorte que l'élément de frappe est propulsé par le ressort 14 en position de déformation. Lorsque l'élément de frappe des moyens 7 de déformation arrive au contact de l'ampoule en verre du premier organe 6 de sécurité, il a une énergie cinétique, fournie par le ressort 14, suffisante pour briser l'ampoule en verre. L'ampoule étant brisée, le premier organe 6 de sécurité ne maintient plus le piston 5 de sécurité en position d'obturation et le ressort 13 le déplace en position de sécurité. Dans le cas présent, le déplacement complet jusqu'en position de sécurité est facilité par la présence du logement 11 du piston 5 de sécurité qui est configuré pour accueillir au moins une partie de l'élément de frappe des moyens 7 de déformation. Le passage du piston 5 de sécurité en position de sécurité permet de libérer le canal 9 d'aération de manière à mettre le volume interne 10 du réservoir 2 en communication fluidique avec l'extérieur du réservoir 2. Le gaz contenu dans le réservoir 2 s'échappe donc vers l'extérieur par le canal 9 d'aération ce qui évite une augmentation de pression à l'intérieur du réservoir 2 qui serait susceptible d'entrainer l'explosion de celui-ci. Le dispositif 3 de sécurité permet ainsi d'obtenir un réservoir 2 plus sûr, pour lequel le risque d'explosion en présence d'une source de chaleur est réduit. On remarque en outre que le troisième organe de sécurité permet de créer un effet de seuil pour le déclenchement des moyens 7 de déformation. En effet, de légères variations de la longueur du câble 16 de sécurité, par exemple dues à son élasticité et à des conditions de remplissage du réservoir 2 différentes ou encore dues au fluage ou au relâchement du matériau du câble 16 de sécurité sous l'action de la chaleur ou du temps (vieillissement), ne permettront pas un déplacement de l'élément de frappe car sa portion réduite sera toujours logée dans l'orifice 22 de repos qui ne permet pas une translation longitudinale de l'élément de frappe. Ainsi, lorsque le deuxième organe 8 de sécurité passe en position de travail, la réserve élastique du ressort 14 n'aura pas été entamée et l'énergie cinétique de l'élément de frappe au moment où il atteint le premier organe 6 de sécurité sera maximale. On réduit ainsi le risque que le dispositif 3 de sécurité ne passe pas en position de sécurité alors que le deuxième organe 8 de sécurité a été soumis à une température supérieure à la température prédéterminée.

L'invention n'est pas limitée aux modes de réalisation présentés et d'autres modes de réalisation apparaîtront clairement à l'homme du métier dans le cadre des revendications.

### Liste de références

1 : véhicule automobile
2 : réservoir
3 : dispositif de sécurité
4 : boitier
5 : piston de sécurité
5a : joint d'étanchéité
5b : bague de glissement
6 : premier organe de sécurité
7 : moyens de déformation
8 : deuxième organe de sécurité
9 : canal d'aération
10 : volume interne du réservoir
11 : logement du piston de sécurité
12 : point fixe pour le premier organe de sécurité
13 : ressort de compression
14 : ressort de compression
15 : rondelle
16 : câble de sécurité
17 : moyens de fixation du deuxième organe de sécurité aux moyens de déformation
18 : anneau
19 : troisième organe de sécurité
20 : corps du troisième organe de sécurité
21 : ressort de traction
22 : orifice de repos de l'organe de liaison
23 : orifice de travail de l'organe de liaison

## Revendications

1. Dispositif (3) de sécurité pour un réservoir (2) destiné à contenir un gaz sous pression, comprenant :
- un canal (9) d'aération destiné à mettre en communication fluidique un volume interne (10) délimité par le réservoir (2) et l'extérieur du réservoir (2),
- un piston (5) de sécurité mobile entre une position d'obturation dans laquelle il obture le canal (9) d'aération, et une position de sécurité dans laquelle il n'obture pas le canal (9) d'aération,
- un premier organe (6) de sécurité déformable configuré pour maintenir le piston (5) de sécurité en position d'obturation à l'encontre d'une force élastique de rappel du piston (5) de sécurité en position de sécurité, le dispositif de sécurité comprenant en outre :
- des moyens (7) de déformation destinés à déformer le premier organe (6) de sécurité, les moyens (7) de déformation étant mobiles entre une position de repos et une position de déformation du premier organe (6) de sécurité, et
- au moins un deuxième organe (8) de sécurité destiné, en position de repos, à maintenir les moyens (7) de déformation en position de repos à l'encontre d'une force élastique de rappel des moyens (7) de déformation en position de déformation du premier organe (6) de sécurité lorsque le deuxième organe (8) de sécurité est soumis à une température inférieure à une température prédéterminée et, en position de travail, à libérer la force élastique de rappel des moyens (7) de déformation en position de déformation du premier organe (6) de sécurité lorsque le deuxième organe (8) de sécurité est soumis à une température supérieure à la température prédéterminée,
dans lequel le deuxième organe (8) de sécurité est formé par un câble (16) de sécurité réalisé en un matériau ayant une faible résistance mécanique au feu.

2. Dispositif (3) de sécurité selon la revendication 1, dans lequel le premier organe (6) de sécurité est formé par une ampoule en verre contenant un fluide, le fluide étant destiné à exercer une pression sur l'ampoule lorsqu'il est soumis à une température supérieure à la température prédéterminée de manière à briser l'ampoule.

3. Dispositif (3) de sécurité selon l'une quelconque des revendications précédentes, dans lequel la force élastique de rappel des moyens (7) de déformation en position de déformation du premier organe (6) de sécurité est fournie par un ressort (14) en appui sur un siège d'appui présentant un orifice configuré pour permettre le passage du deuxième organe de sécurité.

4. Dispositif (3) selon l'une quelconque des revendications précédentes, dans lequel le piston (5) de sécurité présente un logement (11) configuré pour accueillir au moins une partie des moyens (7) de déformation lorsque le piston (5) de sécurité est en position de sécurité et les moyens (7) de déformation sont en position de déformation du premier organe (6) de sécurité.

5. Dispositif (3) de sécurité selon l'une quelconque des revendications précédentes, dans lequel les moyens (7) de déformation comprennent un élément de frappe.

6. Dispositif (3) de sécurité selon l'une quelconque des revendications précédentes, dans lequel le deuxième organe (8) de sécurité comprend un élément élastique.

7. Dispositif (3) de sécurité selon l'une quelconque des revendications précédentes, dans lequel le câble (16) de sécurité est réalisé en un matériau classé D selon la norme européenne EN 13501-1 ou en un matériau classé M3 ou M4 selon la norme française NF P92-507.

8. Dispositif (3) de sécurité selon l'une quelconque des revendications précédentes, dans lequel le câble (16) de sécurité est réalisé en un matériau choisi dans le groupe constitué par les caoutchoucs, les polyamides, les laines, les polyesters, les polyéthylènes haute densité de préférence de haut poids moléculaire, les polypropylènes, et des combinaisons de ceux-ci.

9. Dispositif (3) de sécurité selon la revendication 8, dans lequel le câble (16) de sécurité est réalisé en polypropylène.

10. Dispositif (3) de sécurité selon l'une quelconque des revendications précédentes, dans lequel le câble (16) de sécurité est réalisé en un matériau ayant une résistance mécanique au feu comprise entre 10 secondes et 1 heure, de préférence entre 1 minute et 45 minutes, plus préférentiellement encore entre 10 minutes et 30 minutes.

11. Dispositif (3) de sécurité selon l'une quelconque des revendications précédentes, dans lequel le deuxième organe (8) de sécurité est couplé aux moyens (7) de déformation par un troisième organe (19) de sécurité destiné à coopérer avec le deuxième organe (8) de sécurité de manière à maintenir le deuxième organe (8) de sécurité en position de repos lorsque le deuxième organe (8) de sécurité est soumis à une température inférieure à la température prédéterminée et à rappeler élastiquement le deuxième organe (8) de sécurité en position de travail lorsque le deuxième organe (8) de sécurité est soumis à une température supérieure à la température prédéterminée.

12. Réservoir (2) destiné à contenir un gaz sous pression **caractérisé en ce qu'**il est équipé d'un dispositif (3) de sécurité selon l'une quelconque des revendications 1 à 11.

13. Procédé de fabrication d'un dispositif (3) de sécurité selon l'une quelconque des revendications 1 à 11, dans lequel on met en oeuvre les étapes suivantes :
- on fixe les moyens (7) de déformation sur un boîtier (4) comprenant le canal (9) d'aération, le piston (5) de sécurité et le premier organe (6) de sécurité, et
- on fixe le deuxième organe (8) de sécurité sur le boîtier (4).

## Patentansprüche

1. Sicherheitsvorrichtung (3) für einen Behälter (2), der dazu bestimmt ist, ein unter Druck stehendes Gas zu enthalten, aufweisend:
- einen Belüftungskanal (9), der dazu bestimmt ist, ein durch den Behälter (2) begrenztes Innenvolumen (10) und das Äußere des Behälters (2) in Fluidverbindung zu bringen,
- einen Sicherheitskolben (5), der zwischen einer Verschlussposition, in der er den Belüftungskanal (9) verschließt, und einer Sicherheitsposition, in der er den Belüftungskanal (9) nicht verschließt, beweglich ist,
- ein erstes verformbares Sicherheitselement (6), das so konfiguriert ist, dass es den Sicherheitskolben (5) in der Verschlussposition gegen eine elastische Kraft zur Rückführung des Sicherheitskolbens (5) in die Sicherheitsposition hält, wobei die Sicherheitsvorrichtung ferner aufweist:
- Verformungsmittel (7), die dazu bestimmt sind, das erste Sicherheitselement (6) zu verformen, wobei die Verformungsmittel (7) zwischen einer Ruheposition und einer Position zur Verformung des ersten Sicherheitselements (6) beweglich sind, und
- mindestens ein zweites Sicherheitselement (8), das dazu bestimmt ist, in der Ruheposition die Verformungsmittel (7) in der Ruheposition gegen eine elastische Rückstellkraft der Verformungsmittel (7) in der Position zur Verformung des ersten Sicherheitselements (6) zu halten, wenn das zweite Sicherheitselement (8) einer Temperatur unterhalb einer vorbestimmten Temperatur ausgesetzt ist, und, in der Arbeitsposition, die elastische Rückstellkraft der Verformungsmittel (7) in der Position zur Verformung des ersten Sicherheitselements (6) freizugeben, wenn das zweite Sicherheitselement (8) einer Temperatur ausgesetzt ist, die höher als die vorbestimmte Temperatur ist, wobei das zweite Sicherheitselement (8) durch ein Sicherheitskabel (16) gebildet wird, das aus einem Material mit einer geringen mechanischen Feuerbeständigkeit hergestellt ist.

2. Sicherheitsvorrichtung (3) nach Anspruch 1, bei der das erste Sicherheitselement (6) von einer Glasampulle gebildet wird, die ein Fluid enthält, wobei das Fluid dazu bestimmt ist, einen Druck auf die Ampulle auszuüben, wenn es einer Temperatur ausgesetzt wird, die höher als die vorbestimmte Temperatur ist, so dass die Ampulle zerbricht.

3. Sicherheitsvorrichtung (3) nach einem der vorhergehenden Ansprüche, bei der die elastische Rückstellkraft der Verformungsmittel (7) in die Position zur Verformung des ersten Sicherheitselements (6) von einer Feder (14) geliefert wird, die sich auf einem Stützsitz abstützt, der eine Öffnung aufweist, die so konfiguriert ist, dass sie den Durchgang des zweiten Sicherheitselements ermöglicht.

4. Vorrichtung (3) nach einem der vorhergehenden Ansprüche, wobei der Sicherheitskolben (5) eine Aufnahme (11) aufweist, die so konfiguriert ist, dass sie zumindest einen Teil der Verformungsmittel (7) aufnimmt, wenn sich der Sicherheitskolben (5) in der Sicherheitsposition und die Verformungsmittel (7) in der Position zur Verformung des ersten Sicherheitselements (6) befinden.

5. Sicherheitsvorrichtung (3) nach einem der vorhergehenden Ansprüche, wobei die Verformungsmittel (7) ein Schlagelement aufweisen.

6. Sicherheitsvorrichtung (3) nach einem der vorhergehenden Ansprüche, wobei das zweite Sicherheitselement (8) ein elastisches Element aufweist.

7. Sicherheitsvorrichtung (3) nach einem der vorhergehenden Ansprüche, wobei das Sicherheitskabel (16) aus einem Material besteht, das nach der europäischen Norm EN 13501-1 als D eingestuft ist, oder aus einem Material, das nach der französischen Norm NF P92-507 als M3 oder M4 eingestuft ist.

8. Sicherheitsvorrichtung (3) nach einem der vorhergehenden Ansprüche, wobei das Sicherheitskabel (16) aus einem Material besteht, das aus der Gruppe ausgewählt ist, die aus Kautschuk, Polyamiden, Wolle, Polyestern, Polyethylenen mit hoher Dichte, vorzugsweise mit hohem Molekulargewicht, Polypropylenen und Kombinationen davon besteht.

9. Sicherheitsvorrichtung (3) nach Anspruch 8, wobei das Sicherheitskabel (16) aus Polypropylen hergestellt ist.

10. Sicherheitsvorrichtung (3) nach einem der vorhergehenden Ansprüche, bei der das Sicherheitskabel (16) aus einem Material mit einer mechanischen Feuerbeständigkeit zwischen 10 Sekunden und 1 Stunde, vorzugsweise zwischen 1 Minute und 45 Minuten, noch bevorzugter zwischen 10 Minuten und 30 Minuten, hergestellt ist.

11. Sicherheitsvorrichtung (3) nach einem der vorhergehenden Ansprüche, wobei das zweite Sicherheitselement (8) mit den Verformungsmitteln (7) durch ein drittes Sicherheitselement (19) gekoppelt ist, das dazu bestimmt ist, mit dem zweiten Sicherheitselement (8) so zusammenzuwirken, dass es das zweite Sicherheitselement (8) in der Ruheposition hält, wenn das zweite Sicherheitselement (8) einer Temperatur unterhalb der vorbestimmten Temperatur ausgesetzt ist, und das zweite Sicherheitselement (8) elastisch in die Arbeitsposition zurückruft, wenn das zweite Sicherheitselement (8) einer Temperatur oberhalb der vorbestimmten Temperatur ausgesetzt ist.

12. Behälter (2), der dazu bestimmt ist, ein Gas unter Druck zu enthalten, **dadurch gekennzeichnet, dass** er mit einer Sicherheitsvorrichtung (3) nach einem der Ansprüche 1 bis 11 ausgestattet ist.

13. Verfahren zur Herstellung einer Sicherheitsvorrichtung (3) nach einem der Ansprüche 1 bis 11, bei dem die folgenden Schritte durchgeführt werden:
- Befestigen der Verformungsmittel (7) an einem Gehäuse (4), das den Belüftungskanal (9), den Sicherheitskolben (5) und das erste Sicherheitselement (6) aufweist, und
- Befestigen des zweiten Sicherheitselements (8) an dem Gehäuse (4).

## Claims

1. A safety device (3) for a tank (2) intended to contain a pressurized gas, comprising:
- an ventilation channel (9) intended to establish fluid communication between an internal volume (10) delimited by the tank (2) and the outside of the tank (2),
- a safety piston (5) movable between a closure position in which it closes the ventilation channel (9), and a safety position in which it does not close the ventilation channel (9),
- a first safety member (6) which is deformable and configured to hold the safety piston (5) in the closure position against an elastic return force returning the safety piston (5) in the safety position,
the safety device further comprising:
- deformation means (7) for deforming the first safety member (6), wherein the deformation means (7) are movable between a resting position and a deformation the first safety member (6) position, and
- at least a second safety member (8) intended, in a resting position, to hold the deformation means (7) in the resting position against an elastic force returning the deformation means (7) in the deformation of the first safety member (6) position when the second safety member (8) is subjected to a temperature below a predetermined temperature and, in a working position, to release the elastic force returning the deformation means (7) in the deformation of the first safety member (6) position when the second safety member (8) is subjected to a temperature higher than the predetermined temperature,
wherein the second safety member (8) is formed by a safety cable (16) made of a material having low mechanical fire resistance.

2. The safety device (3) according to claim 1, wherein the first safety member (6) is formed by a glass bulb containing a fluid, the fluid being intended to exert pressure on the bulb when subjected to a temperature above the predetermined temperature so as to break the bulb.

3. The safety device (3) according to any one of the preceding claims, wherein the elastic force returning the deformation means (7) in the deformation of the first safety member (6) position is provided by a spring (14) resting on a support seat having a hole configured to allow the passage of the second safety member.

4. The device (3) according to any one of the preceding claims, wherein the safety piston (5) has a housing (11) configured to house at least part of the deformation means (7) when the safety piston (5) is in a safety position and the deformation means (7) are in the deformation of the first safety member (6) position.

5. The safety device (3) according to any one of the preceding claims, wherein the deformation means (7) comprise a striking element.

6. The safety device (3) according to any one of the preceding claims, wherein the second safety member (8) comprises an elastic member.

7. The safety device (3) according to any one of the preceding claims, wherein the safety cable (16) is made of a material classified D according to the European standard EN 13501-1 or of a material classified M3 or M4 according to the French standard NF P92-507.

8. The safety device (3) according to any one of the preceding claims, wherein the safety cable (16) is made of a material selected from the group consisting of rubbers, polyamides, wools, polyesters, high-density polyethylenes, preferably high molecular weight high-density polyethylenes, polypropylenes, and combinations thereof.

9. The safety device (3) according to claim 8, wherein the safety cable (16) is made of polypropylene.

10. The safety device (3) according to any one of the preceding claims, wherein the safety cable (16) is made of a material having a mechanical fire resistance of between 10 seconds and 1 hour, preferably between 1 minute and 45 minutes, more preferably between 10 minutes and 30 minutes.

11. The safety device (3) according to any one of the preceding claims, wherein the second safety member (8) is coupled to the deformation means (7) by a third safety member (19) intended to cooperate with the second safety member (8) so as to hold the second safety member (8) in the resting position when the second safety member (8) is subjected to a temperature below the predetermined temperature and to elastically return the second safety member (8) to the working position when the second safety member (8) is subjected to a temperature higher than the predetermined temperature.

12. A tank (2) for containing a pressurized gas **characterized in that** it is equipped with a safety device (3) according to any one of claims 1 to 11.

13. A method for manufacturing a safety device (3) according to any one of claims 1 to 11, wherein the following steps are implemented:
- attaching the deformations means (7) to a housing (4) comprising the ventilation channel (9), the safety piston (5) and the first safety member (6), and
- attaching the second safety member (8) to the housing (4).
